# EUROPÄISCHE PATENTSCHRIFT

(11) **EP 3 498 639 B1**
(45) Veröffentlichungstag und Bekanntmachung des Hinweises auf die Patenterteilung: **20.05.2020**
(21) Anmeldenummer: 17207274.6
(22) Anmeldetag: 14.12.2017
(51) Int. Cl.: B65G 47/68

(54) **VORRICHTUNG ZUM ZUSAMMENFÜHREN VON ZWEI IN UNTERSCHIEDLICHEN HÖHEN ANGEORDNETEN STÜCKGUTSTRÖMEN**
DEVICE FOR COMBINING TWO FLOWS OF ITEMS AT DIFFERENT HEIGHTS
DISPOSITIF PERMETTANT DE FUSIONNER DEUX FLUX DE COLIS DISPOSÉS EN DES HAUTEURS DIFFÉRENTES

(43) Veröffentlichungstag der Anmeldung: 19.06.2019
(73) Patentinhaber: BEUMER Group GmbH & Co. KG, 59269 Beckum (DE)
(72) Erfinder: Dirkmann, Markus, 59302 Oelde (DE); Wöhe, Markus, 45657 Recklinghausen (DE)
(74) Vertreter: Philipp, Matthias

(56) Entgegenhaltungen:
- FR-A1- 2 832 654
- GB-A- 1 448 744
- US-A- 4 645 061
- US-A- 5 361 889
- US-A1- 2006 088 404

## Beschreibung

Die Erfindung betrifft eine Vorrichtung zum Zusammenführen von zwei in unterschiedlichen Höhen oder auch vertikal übereinander angeordneten Stückgutströmen, mit einem oberen Förderkanal zur Übernahme von Stückgutteilen von einem oberen Stückgutstrom und einem unteren Förderkanal zur Übernahme von Stückgutteilen von einem unteren Stückgutstrom. In einer bevorzugten Ausführung kann es sich bei der Vorrichtung zum Zusammenführen um eine Endstelle handeln und bei den Stückgutströmen um Fördervorrichtungen oder Sortiervorrichtungen, wobei eine mit einer derartigen Endstelle versehene Sortieranlage aus mindestens einer oberen Sortiervorrichtung und einer unteren Sortiervorrichtung besteht. Bevorzugt weisen die Sortiervorrichtungen Förderrichtungen auf, die einander entgegengesetzt sind. Denkbar wäre auch, dass die Förderrichtungen übereinstimmen.

Bei einer derartigen Vorrichtung, deren Förderkanäle sich zwischen einer ersten Vertikalebene und einer parallelen zweiten Vertikalebene erstrecken, deren gegenseitiger Abstand einer Gesamtkanalbreite der Vorrichtung entspricht, besteht die Schwierigkeit, die Förderkanäle in einer günstigen Weise zusammenzuführen, um die Stückgutteile von den Stückgutströmen stromab bis zu einem Abförderkanal zu leiten. Bei einer bekannten Ausführung werden die Förderkanäle nebeneinander zusammengeführt, wobei jeder Förderkanal eine Breite aufweist, die der Hälfte der Gesamtkanalbreite entspricht. Bei einer solchen Ausführung kann es relativ leicht vorkommen, dass sich Stückgutteile, deren größte Abmessung größer als die Hälfte der Gesamtkanalbreite ist, im Zuge der Ausschleusung in einem Förderkanal verklemmen, was zu erheblichen Betriebsstörungen führen kann.

Die US 5 361 889 A offenbart eine Vorrichtung zum Zusammenführen von mindestens zwei in unterschiedlichen Höhen angeordneten Stückgutströmen, mit einem oberen Förderkanal zur Übernahme von Stückgutteilen von einem oberen Stückgutstrom, und einem unteren Förderkanal zur Übernahme von Stückgutteilen von einem unteren Stückgutstrom, wobei sich die Förderkanäle zwischen einer ersten Vertikalebene und einer parallelen zweiten Vertikalebene, deren gegenseitiger Abstand einer Gesamtkanalbreite der Vorrichtung entspricht, erstrecken, wobei der obere Förderkanal eine erste Förderfläche zwischen einer ersten Seitenwand und einer zweiten Seitenwand aufweist, und eine zweite Förderfläche, die sich angrenzend an eine dritte Seitenwand stromab an die erste Förderfläche anschließt, wobei der untere Förderkanal eine dritte Förderfläche aufweist, die eine Breite aufweist, die größer als die halbe Gesamtkanalbreite ist und von einer vierten Seitenwand und einer fünften Seitenwand begrenzt ist.

Die Aufgabe der Erfindung besteht darin, eine Vorrichtung zum Zusammenführen von mindestens zwei in unterschiedlichen Höhen oder übereinander angeordnete Stückgutströme bereitzustellen, bei der die Gefahr einer Verklemmung von Stückgutteilen in einem Förderkanal reduziert ist.

Diese Aufgabe wird erfindungsgemäß durch eine Vorrichtung zum Zusammenführen von mindestens zwei in unterschiedlichen Höhen angeordnete Stückgutströmen nach Anspruch 1 gelöst.

Die zweite Förderfläche schließt bevorzugt lückenlos und mit bezogen auf die erste Förderfläche gleich großem, größerem oder kleinerem Gefälle an die erste Förderfläche an. Die Breite der zweiten Förderfläche ist bevorzugt über ihre Länge konstant.

Obwohl die zweite Förderfläche eine geringere Breite als die Hälfte der Gesamtkanalbreite aufweist, können darauf Stückgutteile gefördert werden, deren Breite größer als die der zweiten Förderfläche ist und die bis zu einem der Gesamtkanalbreite entsprechenden Maß betragen kann, da die zweite Förderfläche an ihrem mit Abstand oder parallel zur ersten Vertikalebene verlaufenden Seitenrand frei endet und größere Stückgutteile über diesen Seitenrand überstehen können. Da der untere Förderkanal bzw. die dritte Förderfläche eine Breite besitzt, die größer als die halbe Gesamtkanalbreite ist, können auch in diesem Kanal Stückgutteile transportiert werden, deren Breite größer als die halbe Gesamtkanalbreite ist, so dass einem Verklemmen effektiv entgegengewirkt wird.

Die zweite Seitenwand kann vollständig in der zweiten Vertikalebene verlaufen, wobei vorgesehen sein kann, dass die erste Förderfläche einen zwischen der zweiten Seitenwand und dem Seitenrand der zweiten Förderfläche angeordneten stromabseitigen Endabschnitt aufweist, der in einem vertikalen Abstand oberhalb des unteren Förderkanals bzw. der dritten Förderfläche angeordnet ist. Stückgutteile, die in einzelnen Fällen trotz ihrer ursprünglichen, in den Stückgutströmen herrschenden Fördergeschwindigkeit beim Abgabevorgang nicht gegen die erste Seitenwand und auf die zweite Förderfläche gelangen, können dann von dem stromabseitigen Endabschnitt der ersten Förderfläche auf den unteren Förderkanal bzw. auf die dritte Förderfläche fallen. Alternativ besteht die Möglichkeit, dass die zweite Seitenwand spitzwinklig zu der zweiten Vertikalebene verläuft und sich ausgehend von der zweiten Vertikalebene in Richtung der zweiten Förderfläche erstreckt. Diese Variante hat den Vorteil, dass die ankommenden Stückgutteile in jedem Fall auf die zweite Förderfläche geleitet werden, wobei jedoch u.U. eine gewisse Möglichkeit des Verklemmens einzelner Teile besteht.

Die erste Förderfläche kann einen zwischen der zweiten Seitenwand und dem Seitenrand angeordneten stromabseitigen Endabschnitt aufweisen, der in einem vertikalen Abstand oberhalb des unteren Förderkanals bzw. der dritten Förderfläche angeordnet ist.

Die fünfte Seitenwand kann von einer in der ersten Vertikalebene befindlichen Anfangsposition bis zu einer vertikal unter dem Seitenrand der zweiten Förderfläche befindlichen Endposition verlaufen, etwa geradlinig oder bogenförmig. Die fünfte Seitenwand kann einen spitzwinklig zu der ersten Vertikalebene verlaufenden Übergangsabschnitt und einen daran anschließenden, parallel zu der ersten Vertikalebene verlaufenden Führungsabschnitt aufweisen, dessen Abstand von der ersten Vertikalebene der Breite der zweiten Förderfläche entspricht.

Es kann vorgesehen sein, dass die erste Förderfläche horizontal, d.h. senkrecht zu der ersten und zweiten Vertikalebene angeordnet ist. Weiter kann vorgesehen sein, dass die zweite Förderfläche entweder senkrecht zu der ersten Vertikalebene oder unter einem Winkel zu der ersten Vertikalebene oder dritten Seitenwand schräg abfallend angeordnet ist. Entsprechend besteht die Möglichkeit, dass ein Teilbereich der ersten Förderfläche, der ausgehend von der ersten Vertikalebene oder ersten Seitenwand eine gleiche Breite wie die zweite Förderfläche aufweist, entweder senkrecht zu der ersten Vertikalebene oder ersten Seitenwand oder aber unter einem Winkel schräg zu der ersten Vertikalebene oder ersten Seitenwand abfallend angeordnet ist. Der genannte Winkel kann beispielsweise zwischen 5° und 30° betragen, so dass eine Art Förderrinne für Stückgutteile gebildet ist.

Zweckmäßigerweise ist vorgesehen, dass die untere Förderfläche senkrecht zu den Vertikalebenen angeordnet ist.

Der Abförderkanal weist bevorzugt eine horizontal oder senkrecht zu den Vertikalebenen verlaufende vierte Förderfläche auf.

Ein stromabseitiger Endabschnitt der zweiten Förderfläche ist bevorzugt in gleicher Höhe wie ein stromabseitiger Endabschnitt der dritten Förderfläche angeordnet, um einen problemlosen Übergang der Stückgutteile an den Abförderkanal bzw. die vierte Förderfläche zu gewährleisten. Zweckmäßigerweise befinden sich die beiden Endabschnitte an einer gleichen Längsposition, damit die vierte Förderfläche lückenlos an die zweite und dritte Förderfläche anschließen kann.

Die erste Förderfläche und/oder, soweit vorhanden, der Teilbereich der ersten Förderfläche und/oder die zweite Förderfläche und/oder die dritte untere Förderfläche und/oder die vierte Förderfläche können jeweils als Gleitfläche, Gleitblech oder Rutsche, angetriebene oder passive Rollenbahn oder Band- oder Riemenförderer ausgebildet sein.

Bevorzugt ist vorgesehen, dass die erste Förderfläche, soweit vorhanden der Teilbereich der ersten Förderfläche und die zweite Förderfläche ein Gefälle aufweisen. Die dritte Förderfläche kann ein Gefälle aufweisen oder horizontal angeordnet sein.

Die Vorrichtung zum Zusammenführen von Stückgutströmen kann mindestens eine obere Sortiervorrichtung und mindestens eine untere Sortiervorrichtung umfassen, wobei die Stückgutströme als Sortiervorrichtungen ausgebildet sind und wobei sich die Sortiervorrichtungen vertikal übereinander oder in einem horizontalen Abstand voneinander befinden können. Die Sortiervorrichtungen können als Quergurt-Sorter ausgebildet sein.

Es kann vorgesehen sein, dass die Sortiervorrichtungen in gleichen oder entgegengesetzten Förderrichtungen betreibbar sind.

Zweckmäßigerweise ist vorgesehen, dass die Vertikalebenen senkrecht zu den Förderrichtungen angeordnet sind.

Die Erfindung wird nachfolgend anhand von Ausführungsbeispielen erläutert, wobei auf eine Zeichnung Bezug genommen ist, in der
- Fig. 1: eine schematische Seitenansicht einer erfindungsgemäßen Vorrichtung in Form einer Endstelle benachbart zu einer oberen und einer unteren Sortiervorrichtung zeigt,
- Fig.2: eine Draufsicht auf die Vorrichtung zeigt,
- Fig. 3: eine Schnittansicht entlang Linie III-III in Fig. 1 zeigt,
- Fig. 4 bis 6: perspektivische Ansichten der Vorrichtung aus unterschiedlichen Richtungen zeigen,
- Fig. 7: eine perspektivische Ansicht ähnlich Fig. 4 einer alternativen Ausführungsform zeigt,
- Fig. 8: eine weitere perspektivische Ansicht der Ausführungsform nach Fig. 7 zeigt, und
- Fig. 9: eine Schnittansicht entlang Linie IX-IX in Fig. 8 zeigt, wobei zusätzlich Stückgutteile dargestellt sind.

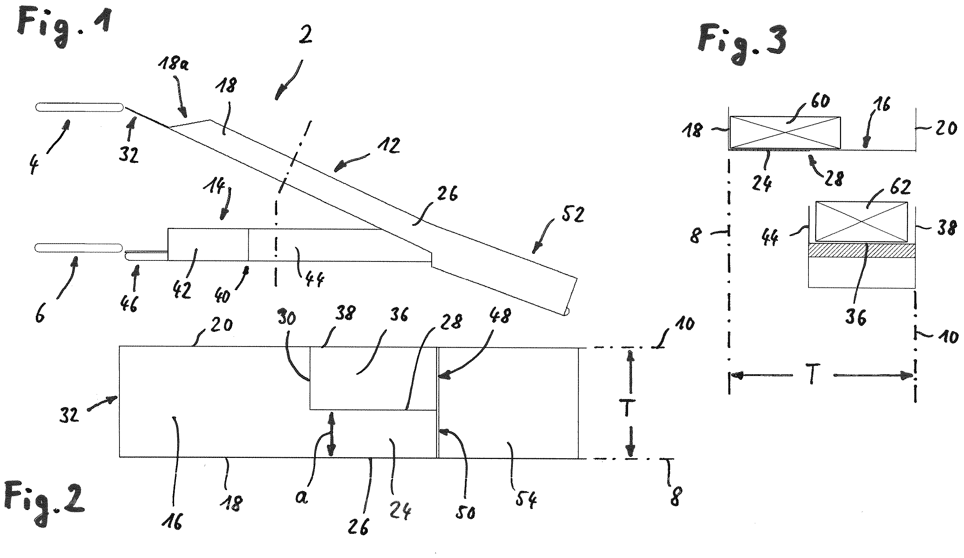

Zunächst wird eine erste Ausführungsform der Erfindung anhand Fig. 1 bis 6 erläutert. Die erfindungsgemäße Vorrichtung in Form einer Endstelle 2 dient der Übernahme von Stückgutteilen von mindestens zwei in unterschiedlichen Höhen oder auch vertikal übereinander angeordneten Stückgutströmen, die in Fig. 1 mit 4 und 6 bezeichnet und beispielhaft als Sortiervorrichtungen ausgebildet sind. Anstelle einer oder beider Sortiervorrichtungen könnte jegliche Fördertechnik oder Vorrichtung zur Erzeugung von Stückgutströmen vorhanden sein, mit der einzelne Stückgutteile in zwei Bahnen herangefördert werden, die zu einem einzigen Fördergutstrom vereinigt werden sollen. In der dargestellten Ausführungsform ist eine obere Sortiervorrichtung 4 vertikal über einer unteren Sortiervorrichtung 6 angeordnet, deren Förderrichtungen horizontal, senkrecht zur Zeichenebene, verlaufen. Die Sortiervorrichtungen können bspw. als Quergurtsorter ausgebildet sein, wobei sich auf jeweils einem Fahrwagen oder Sorterelement eine quer zur Förderrichtung antreibbare Lastaufnahmeeinrichtung befindet, mit der einzelne Stückgutteile an der Endstelle 2 horizontal und quer zur Förderrichtung abgegeben werden können. In der Regel sind eine Vielzahl von Endstellen in Förderrichtung gesehen hintereinander benachbart zu den Sortiervorrichtungen angeordnet, wobei der Sortiervorgang durch Auswahl einer bestimmten Endstelle erfolgt. Jeweils eine Endstelle und insbesondere die in Fig. 1 dargestellte Endstelle 2 befindet sich zwischen zwei beabstandeten Vertikalebenen, einer ersten Vertikalebene 8 und einer in einem Abstand T, der auch als Gesamtkanalbreite der Endstelle bezeichnet wird, davon befindlichen zweiten Vertikalebene 10. Die Vertikalebenen 8, 10 sind bevorzugt senkrecht zu den Förderrichtungen der Sortiervorrichtungen 4, 6 angeordnet.

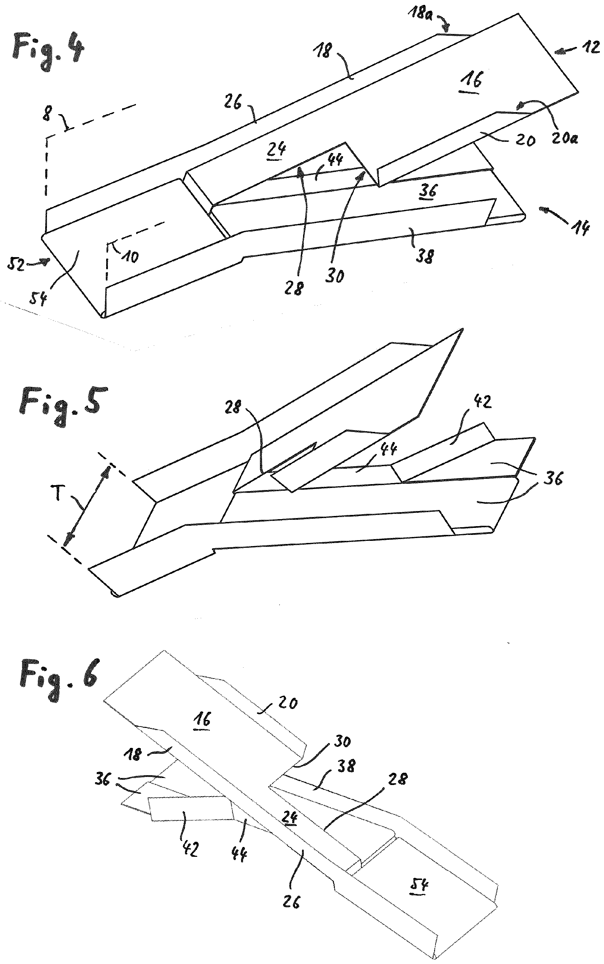

Der grundsätzliche Aufbau der Endstelle 2 wird am besten aus den perspektivischen Ansichten gemäß Fig. 4 bis 6 deutlich. Die Endstelle 2 besitzt einen oberen Förderkanal 12 zur Übernahme von Stückgutteilen von der oberen Sortiervorrichtung 4 und einem unteren Förderkanal 14 zur Übernahme von Stückgutteilen von der unteren Sortiervorrichtung 6. Der obere Förderkanal 12 weist eine erste Förderfläche 16 auf, die von einer in der ersten Vertikalebene 8 verlaufenden ersten Seitenwand 18 und von einer in der zweiten Vertikalebene 10 verlaufenden zweiten Seitenwand 20 begrenzt ist. Weiterhin weist der obere Förderkanal 12 anschließend an die erste Förderfläche 16 eine zweite Förderfläche 24 auf, die von einer in der ersten Vertikalebene 8 verlaufenden dritten Seitenwand 26 begrenzt ist. Die dritte Seitenwand 26 kann sich unmittelbar an die erste Seitenwand 18 anschließen. Die zweite Förderfläche 24 weist einen Seitenrand 28 auf, an dem sie frei endet. Der Seitenrand 28 verläuft parallel zur ersten Verbindungsebene 8 und weist einen Abstand a davon auf, der einer Breite der zweiten Förderfläche 24 entspricht und kleiner ist als die Hälfte der Gesamtkanalbreite T. Die erste Förderfläche 16 hat eine Breite, die der Gesamtkanalbreite T entspricht und weist zwischen der zweiten Seitenwand 20 und dem Seitenrand 28 der zweiten Förderfläche 24 einen stromabseitigen Endabschnitt 30 auf, der in einem vertikalen Abstand oberhalb des unteren Förderkanals 14 endet.

Die erste Seitenwand 18 und die zweite Seitenwand 20 enden mit stromaufseitigen Endabschnitten 18a, 20a jeweils in einem Abstand von einem stromaufseitigen Endabschnitt 32 der ersten Förderfläche 16, um zu ermöglichen, dass von der oberen Sortiervorrichtung 4 quer zur Förderrichtung abgegebene Stückgutteile eine gebogene Trajektorie durchlaufen können, was bei höheren Förder- und Abgabegeschwindigkeiten zweckmäßig ist.

Der stromaufseitige Endabschnitt 32 der ersten Förderfläche 16 ist bei Verwendung der Endstelle unmittelbar benachbart zu der oberen Sortiervorrichtung 6 angeordnet, wie die Seitenansicht nach Fig. 1 zeigt.

Der untere Förderkanal 14 weist eine dritte Förderfläche 36 auf, die von einer in der zweiten Vertikalebene 10 verlaufenden vierten Seitenwand 38 und einer fünften Seitenwand 40 begrenzt ist. Die fünfte Seitenwand 40 verläuft von einer in der ersten Vertikalebene 8 befindlichen Anfangsposition bis zu einer vertikal unter dem Seitenrand 28 der zweiten Förderfläche 24 befindlichen Endposition, wobei sie einen spitzwinklig zu der ersten Vertikalebene 8 verlaufenden Übergangsabschnitt 42 und einen daran anschließenden, parallel zu der ersten Vertikalebene 8 verlaufenden Führungsabschnitt 44 aufweist, dessen Abstand von der ersten Vertikalebene der Breite der zweiten Förderfläche 24 entspricht. Die vierte Seitenwand 38 und die fünfte Seitenwand 40 beginnen in einem Abstand von einem stromaufseitigen Endabschnitt 46 der dritten Förderfläche 36, der sich benachbart zu der unteren Sortiervorrichtung 6 befindet, wie auch Fig. 1 zeigt, um, wie vorstehend im Hinblick auf die erste und zweite Seitenwand der ersten Förderfläche 16 erläutert, eine günstige Übergabe der Stückgutteile zu ermöglichen.

Ein stromabseitiger Endabschnitt 48 der dritten Förderfläche 36 befindet sich in gleicher Höhe und unmittelbar benachbart zu einem stromabseitigen Endabschnitt 50 der zweiten Förderfläche 24, wobei sich ein Abförderkanal 52 mit einer vierten Förderfläche 54 an die zweite Förderfläche 24 und die dritte Förderfläche 36 bzw. deren stromabseitige Endabschnitte 48, 50 anschließt. Die vierte Förderfläche 54 erstreckt sich über die volle Breite oder die Gesamtkanalbreite T der Endstelle 2, zwischen den Vertikalebenen 8, 10 und zwischen in diesen verlaufenden Seitenwänden, die sich lückenlos an die dritten und vierten Seitenwände 26, 38 der zweiten und dritten Förderflächen 24, 36 anschließen können.

Fig. 3 erläutert in einer Schnittansicht, wie Stückgutteile, die breiter als die halbe Breite oder die halbe Gesamtkanalbreite der Endstelle 2 sein können, störungsfrei auf dem oberen Förderkanal und dem unteren Förderkanal von den Sortiervorrichtungen ausgeschleust werden können. Fig. 3 zeigt im oberen Teil der Darstellung ein Stückgutteil 60, das sich auf der zweiten Förderfläche 24 in Anlage gegen die dritte Seitenwand 26 befindet, wobei es aufgrund seiner Breite seitlich über die zweite Förderfläche 24 und deren Seitenrand 28 übersteht. Entsprechend zeigt Fig. 3 im unteren Teil der Darstellung ein Stückgutteil 62 auf der dritten Förderfläche 36, wobei deren Breite bzw. der gegenseitige Abstand der vierten und fünften Seitenwände 38, 40 größer als die halbe Gesamtkanalbreite T ist. Fig. 3 zeigt auch, dass sich der Seitenrand 28 der zweiten Förderfläche 24 vertikal über der vierten Seitenwand 38 der dritten Förderfläche 36 befindet. Die Draufsicht gemäß Fig. 2 zeigt ebenfalls deutlich die Breitenverhältnisse der ersten Förderfläche 16, der zweiten Förderfläche 24 und der dritten Förderfläche 36, sowie des Abförderkanals 52 mit der vierten Förderfläche 54.

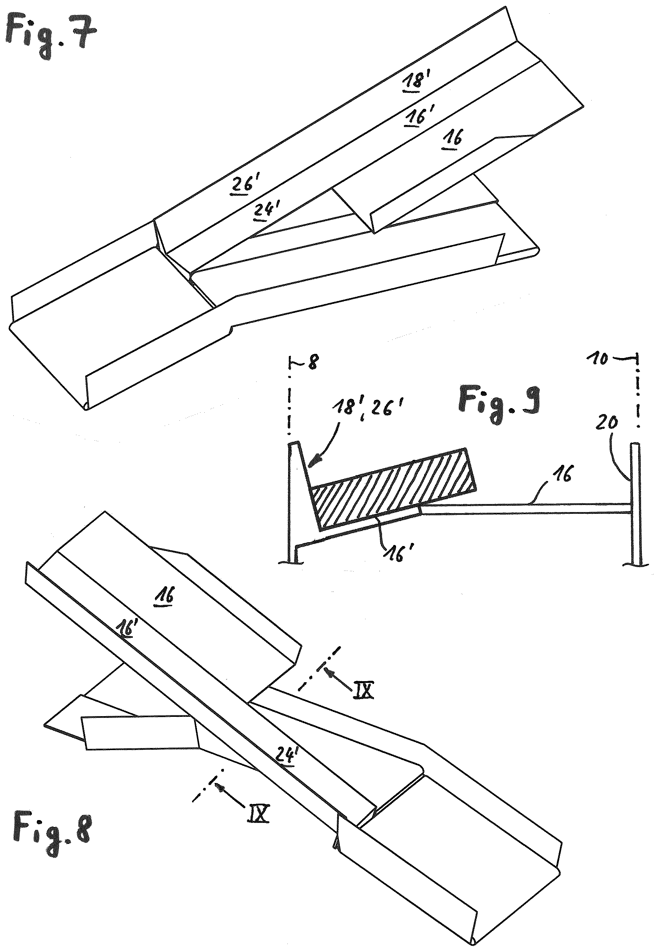

Fig. 7 bis 9 erläutern eine zweite Ausführungsform, bei der im Unterschied zur vorstehend beschriebenen Ausführungsform die zweite Förderfläche 24' und ein Teilbereich 16' der ersten Förderfläche 16 nicht senkrecht zu den Vertikalebenen 8, 10 verlaufen, sondern ausgehend von der ersten Förderfläche 16 bzw. der dadurch festgelegten Ebene schräg abfallend in Richtung der ersten Vertikalebene 8 angeordnet sind. Fig. 9 zeigt beispielhaft eine Anordnung, bei der die zweite Förderfläche 24' und der Teilbereich 16' der ersten Förderfläche unter einem Winkel von ca. 15° gegenüber der ersten Förderfläche 16 abfallend in Richtung der ersten Vertikalebene 8 verlaufen. Weiterhin zeigen Fig. 7 bis 9, dass auch die erste Seitenwand 18' und die dritte Seitenwand 26' unter einem Winkel zur ersten Vertikalebene 8 angeordnet sein können, so dass sie rechtwinklig zur schräg verlaufenden zweiten Förderfläche 24' und dem Teilbereich 16' der ersten Förderfläche 16 verlaufen. Wie Fig. 9 zeigt, können Stückgutteile, die häufig quaderförmig sind, dann besonders günstig gefördert werden.

### Bezugszeichenliste

- 2: Endstelle (Vorrichtung)
- 4: obere Sortiervorrichtung (Stückgutstrom)
- 6: untere Sortiervorrichtung (Stückgutstrom)
- 8: erste Vertikalebene
- 10: zweite Vertikalebene
- 12: oberer Förderkanal
- 14: unterer Förderkanal
- 16: erste Förderfläche
- 16': Teilbereich (von 16)
- 18, 18': erste Seitenwand
- 18a: stromaufseitiger Endabschnitt
- 20: zweite Seitenwand
- 20a: stromaufseitiger Endabschnitt
- 24, 24': zweite Förderfläche
- 26, 26': dritte Seitenwand
- 28: Seitenrand
- 30: stromabseitiger Endabschnitt (von 16)
- 32: stromaufseitiger Endabschnitt (von 16)
- 36: dritte Förderfläche
- 38: vierte Seitenwand
- 40: fünfte Seitenwand
- 42: Übergangsabschnitt
- 44: Führungsabschnitt
- 46: stromaufseitiger Endabschnitt (von 36)
- 48: stromabseitiger Endabschnitt (von 36)
- 50: stromabseitiger Endabschnitt (von 24)
- 52: Abförderkanal
- 54: vierte Förderfläche
- 60, 62: Stückgutteil

- a: Abstand
- T: Gesamtkanalbreite (Teilungsmaß der Endstelle)

## Patentansprüche

1. Vorrichtung (2) zum Zusammenführen von mindestens zwei in unterschiedlichen Höhen angeordneten Stückgutströmen (4,6), mit einem oberen Förderkanal (12) zur Übernahme von Stückgutteilen (60) von einem oberen Stückgutstrom (4), und einem unteren Förderkanal (14) zur Übernahme von Stückgutteilen (62) von einem unteren Stückgutstrom (6), wobei sich die Förderkanäle (12,14) zwischen einer ersten Vertikalebene (8) und einer parallelen zweiten Vertikalebene (10), deren gegenseitiger Abstand einer Gesamtkanalbreite (T) der Vorrichtung entspricht, erstrecken, wobei der obere Förderkanal (12) eine erste Förderfläche (16) zwischen einer ersten, in der ersten Vertikalebene (8) verlaufenden Seitenwand (18) und einer zweiten Seitenwand (20) aufweist, wobei die zweite Seitenwand (20) zumindest an einem stromaufseitigen Endabschnitt (20a) in der zweiten Vertikalebene (10) verläuft, und eine zweite Förderfläche (24), die sich angrenzend an eine in der ersten Vertikalebene (8) verlaufende dritte Seitenwand (26) stromab an die erste Förderfläche (16) anschließt und eine Breite aufweist, die kleiner als die Hälfte der Gesamtkanalbreite (T) ist, wobei die zweite Förderfläche (24) an einem parallel zur ersten Vertikalebene (8) verlaufenden Seitenrand (28) in einem vertikalen Abstand oberhalb des unteren Förderkanals (14) frei endet, wobei der untere Förderkanal (14) eine dritte Förderfläche (36) aufweist, die eine Breite aufweist, die größer als die halbe Gesamtkanalbreite (T) ist und von einer in der zweiten Vertikalebene (10) verlaufenden vierten Seitenwand (38) und einer fünften Seitenwand (40) begrenzt ist, wobei eine Breite der dritten Förderfläche (36) an einem stromabseitigen Ende (30) des unteren Förderkanals (14) der Gesamtkanalbreite (T) abzüglich der Breite der zweiten Förderfläche (24) entspricht, wobei stromabseitige Enden (50, 48) der zweiten und dritten Förderflächen (24, 36) an einen Abförderkanal (52) anschließen, der sich zur Übernahme von Stückgutteilen (60) von dem oberen und unteren Förderkanal (12, 14) zwischen den Vertikalebenen (8, 10) erstreckt.

2. Vorrichtung (2) nach Anspruch 1, **dadurch gekennzeichnet, dass** die zweite Seitenwand (20) vollständig in der zweiten Vertikalebene (10) verläuft.

3. Vorrichtung (2) nach Anspruch 1, **dadurch gekennzeichnet, dass** die zweite Seitenwand (20) spitzwinklig zu der zweiten Vertikalebene (10) verläuft und sich ausgehend von der zweiten Vertikalebene (10) in Richtung der zweiten Förderfläche (24) erstrecken kann.

4. Vorrichtung (2) nach einem der vorangehenden Ansprüche, **dadurch gekennzeichnet, dass** die erste Förderfläche (16) einen zwischen der zweiten Seitenwand (20) und dem Seitenrand (28) angeordneten stromabseitigen Endabschnitt (30) aufweist, der in einem vertikalen Abstand oberhalb des unteren Förderkanals (14) angeordnet ist.

5. Vorrichtung (2) nach einem der vorangehenden Ansprüche, **dadurch gekennzeichnet, dass** die fünfte Seitenwand (40) von einer in der ersten Vertikalebene (8) befindlichen Anfangsposition bis zu einer vertikal unter dem Seitenrand (28) der zweiten Förderfläche (24) befindlichen Endposition verläuft.

6. Vorrichtung (2) nach einem der vorangehenden Ansprüche, **dadurch gekennzeichnet, dass** die fünfte Seitenwand (40) einen spitzwinklig zu der ersten Vertikalebene (8) verlaufenden Übergangsabschnitt (42) und einen anschließenden parallel zu der ersten Vertikalebene (8) verlaufenden Führungsabschnitt (44) aufweist, dessen Abstand von der ersten Vertikalebene (8) der Breite der zweiten Förderfläche (24) entspricht.

7. Vorrichtung (2) nach einem der vorangehenden Ansprüche, **dadurch gekennzeichnet, dass** die erste Förderfläche (16) senkrecht zu der ersten und zweiten Vertikalebene (8, 10) angeordnet ist.

8. Vorrichtung (2) nach einem der vorangehenden Ansprüche, **dadurch gekennzeichnet, dass** die zweite Förderfläche (24) senkrecht zu der ersten Vertikalebene (8) oder unter einem Winkel zu der ersten Vertikalebene (8) schräg abfallend angeordnet ist.

9. Vorrichtung (2) nach Anspruch 8, **dadurch gekennzeichnet, dass** ein Teilbereich (16') der ersten Förderfläche (16), der ausgehend von der ersten Vertikalebene (8) eine gleiche Breite wie die zweite Förderfläche (24) aufweist, entweder senkrecht zu der ersten Vertikalebene (8) oder unter einem Winkel zu der ersten Vertikalebene (8) schräg abfallend angeordnet ist.

10. Vorrichtung (2) nach einem der vorangehenden Ansprüche, **dadurch gekennzeichnet, dass** die dritte Förderfläche (36) senkrecht zu den Vertikalebenen (8, 10) angeordnet ist.

11. Vorrichtung (2) nach einem der vorangehenden Ansprüche, **dadurch gekennzeichnet, dass** ein stromabseitiger Endabschnitt (50) der zweiten Förderfläche (24) in gleicher Höhe wie ein stromabseitiger Endabschnitt (48) der dritten Förderfläche (36) angeordnet ist.

12. Vorrichtung (2) nach einem der vorangehenden Ansprüche, **dadurch gekennzeichnet, dass** der Abförderkanal (52) eine senkrecht zu den Vertikalebenen (8, 10) verlaufende vierte Förderfläche (54) aufweist.

13. Vorrichtung (2) nach einem der vorangehenden Ansprüche, **dadurch gekennzeichnet, dass** die erste Förderfläche (16) und/oder soweit vorhanden, der Teilbereich (16') der ersten Förderfläche (16) und/oder die zweite Förderfläche (24) und/oder die dritte Förderfläche (36) und/oder die vierte Förderfläche (54) jeweils als Gleitfläche, Gleitblech, Rutsche, angetriebene oder passive Rollenbahn oder Band- oder Riemenförderer ausgebildet ist.

14. Vorrichtung (2) nach einem der vorangehenden Ansprüche, **dadurch gekennzeichnet, dass** die erste Förderfläche (16), soweit vorhanden der Teilbereich (16') der ersten Förderfläche (16) und die zweite Förderfläche (24) ein Gefälle aufweisen.

15. Vorrichtung (2) nach einem der vorangehenden Ansprüche, **dadurch gekennzeichnet, dass** der Vorrichtung eine obere Sortiervorrichtung und eine untere Sortiervorrichtung (6) zugeordnet ist und die Vorrichtung (2) als Endstelle ausgebildet ist.

## Claims

1. Device (2) for combining at least two flows of items (4, 6), arranged at different heights, with an upper feed channel (12) for receiving packages (60) from an upper flow of items (4), and a lower feed channel (14) for receiving packages (62) from a lower flow of items (6), the feed channels (12, 14) extending between a first vertical plane (8) and a parallel second vertical plane (10), whose distance from each other corresponds to a total channel width (T) of the device, the upper feed channel (12) having a first conveying surface (16) between a first side panel (18) running in the first vertical plane (8) and a second side panel (20), the second side panel (20) running in the second vertical plane (10) at least on an upstream-side final section (20a), and a second conveying surface (24), which downstream joins the first conveying surface (16) adjacent to a third side panel (26) running in the first vertical plane (8) and has a width, which is less than half the total channel width (T), wherein the second conveying surface (24) loosely ends at a side edge (28) running parallel to the first vertical plane (8) at a vertical distance above the lower feed channel (14), the lower feed channel (14) having a third conveying surface (36), which has a width, which is larger than half the total channel width (T) and is bordered by a fourth side panel (38) running in the second vertical plane (10) and by a fifth side panel (40), wherein a width of the third conveying surface (36) at a downstream-side end (30) of the lower feed channel (14) corresponds to the total channel width (T) less the width of the second conveying surface (24), wherein downstream-side ends (50, 48) of the second and third conveying surfaces (24, 36) join a discharge channel (52), which for receiving packages (60) from the upper and lower feed channel (12, 14) extends between the vertical planes (8, 10).

2. Device (2) according to claim 1, **characterized in that** the second side panel (20) runs completely in the second vertical plane (10).

3. Device (2) according to claim 1, **characterized in that** the second side panel (20) runs acutely to the second vertical plane (10) and originating from the second vertical plane (10) can extend toward the second conveying surface (24).

4. Device (2) according to one of the preceding claims, **characterized in that** the first conveying surface (16) has a downstream-side final section (30) arranged between the second side panel (20) and the side edge (28), which is located at a vertical distance above the lower feed channel (14).

5. Device (2) according to one of the preceding claims, **characterized in that** the fifth side panel (40) runs from an initial position located in the first vertical plane (8) to an end position arranged vertically under the side edge (28) of the second conveying surface (24).

6. Device (2) according to one of the preceding claims, **characterized in that** the fifth side panel (40) has a transition section (42) running acutely to the first vertical plane (8) and a joining guidance section (44) running parallel to the first vertical plane (8), whose distance from the first vertical plane (8) corresponds to the width of the second conveying surface (24).

7. Device (2) according to one of the preceding claims, **characterized in that** the first conveying surface (16) is arranged perpendicularly to the first and second vertical plane (8, 10).

8. Device (2) according to one of the preceding claims, **characterized in that** the second conveying surface (24) is arranged perpendicularly to the first vertical plane (8) or sloping diagonally at an angle to the first vertical plane (8)

9. Device (2) according to claim 8, **characterized in that** a sub-section (16 ') of the first conveying surface (16), which originating from the first vertical plane (8) has the same width as the second conveying surface (24), either perpendicularly to the first vertical plane (8) or arranged sloping diagonally at an angle to the first vertical plane (8).

10. Device (2) according to one of the preceding claims, **characterized in that** the third conveying surface (36) is arranged perpendicularly to the vertical planes (8, 10).

11. Device (2) according to one of the preceding claims, **characterized in that** a downstream-side final section (50) of the second conveying surface (24) is arranged at the same height as a downstream-side final section (48) of the third conveying surface (36).

12. Device (2) according to one of the preceding claims, **characterized in that** the discharge channel (52) has a fourth conveying surface (54), running perpendicularly to the vertical planes (8, 10).

13. Device (2) according to one of the preceding claims, **characterized in that** in each case the first conveying surface (16) and/or so far as available, the sub-section (16 ') of the first conveying surface (16) and/or the second conveying surface (24) and/or the third conveying surface (36) and/or the fourth conveying surface (54) is formed as a sliding surface, sliding metal sheet, chute, driven or passive roller track or band- or belt-conveyor.

14. Device (2) according to one of the preceding claims, **characterized in that** the first conveying surface (16), so far as available the sub-section (16 ') of the first conveying surface (16) and the second conveying surface (24) have a downward gradient.

15. Device (2) according to one of the preceding claims, **characterized in that** the device (2) is associated with an upper sorting device (4) and a lower sorting device (6) and the device (2) is formed as termination point.

## Revendications

1. Dispositif (2) permettant de fusionner au moins deux flux de colis (4, 6) disposés à des hauteurs différents, avec une voie supérieure d'alimentation (12) pour la réception des paquets (60) depuis un acheminement supérieur des paquets (4), et avec une voie inférieure d'alimentation (14) pour la réception des paquets (62) depuis un acheminement inférieur des paquets (6), et ces voies d'alimentation (12, 14) viennent s'implanter entre un premier plan vertical (8) et un deuxième plan vertical (10), et la distance les séparant correspond à la largeur totale des voies (T) de ce dispositif, et la voie supérieure d'alimentation (12) a une première surface d'acheminement (16) qui vient s'insérer entre un premier panneau latéral (18), qui se situe dans le premier plan vertical (8), et un deuxième panneau latéral (20), et ce deuxième panneau latéral (20) se situe dans le deuxième plan vertical (10), au moins sur une section finale du côté amont (20a), et a une deuxième surface d'acheminement (24) qui rejoint, en aval, la première surface d'acheminement (16), d'un côté adjacent à un troisième panneau latéral (26) qui se situe dans le premier plan vertical (8) et a une largeur inférieure à la moitié de la largeur totale des voies (T), et cette deuxième surface d'acheminement (24) se termine, de manière lâche au niveau d'une bordure latérale (28) qui se situe à la parallèle du premier plan vertical (8), à une distance verticale au-dessus de la voie inférieure d'acheminement (14), et cette voie inférieure d'acheminement (14) a une troisième surface d'acheminement (36), qui a une largeur supérieure à la moitié de la largeur totale des voies (T) et qui est bordée par un quatrième panneau latéral (38) qui se situe dans le deuxième plan vertical (10) et par un cinquième panneau latéral (40), et une largeur de la troisième surface d'acheminement (36), au niveau d'une extrémité aval (30) de la voie inférieure d'acheminement (14), correspond à la largeur totale des voies (T) moins la largeur de la deuxième surface d'acheminement (24), alors que les extrémités aval (50, 48) de la deuxième surface d'acheminement (24) et de la troisième surface d'acheminement (36) rejoignent une voie de décharge (52) qui, pour recevoir les paquets (60) en provenance des voies supérieures et inférieurs d'alimentation (12, 14), vient s'implanter entre les plans verticaux (8, 10).

2. Le dispositif (2) que décrit la revendication 1 et qui se **caractérise par le fait que** le deuxième panneau latéral (20) se situe, dans sa totalité dans le deuxième plan vertical (10).

3. Le dispositif (2) que décrit la revendication 1 et qui se **caractérise par le fait que** le deuxième panneau latéral (20) aboutit, avec précision, au deuxième plan vertical (10) et, après être parti du deuxième plan vertical (10) peut se prolonger en direction de la deuxième surface d'acheminement (24).

4. Le dispositif (2) que décrit l'une ou l'autre des revendications précédentes et qui se **caractérise par le fait que** la première surface d'acheminement (16) a une section finale du côté aval (30) qui vient s'implanter entre le deuxième panneau latéral (20) et la bordure latérale (28), qui se trouve à une distance verticale au-dessus de la voie inférieure d'alimentation (14).

5. Le dispositif (2) que décrit l'une ou l'autre des revendications précédentes et qui se **caractérise par le fait que** le cinquième panneau latéral (40) part d'une position initiale qui se trouve dans le premier plan vertical (8) et aboutit à un emplacement disposé à la verticale sous la bordure latérale (28) de la deuxième surface d'acheminement (24).

6. Le dispositif (2) que décrit l'une ou l'autre des revendications précédentes et qui se **caractérise par le fait que** le cinquième panneau latéral (40) a une section de transition (42) qui aboutit, de façon précise, au premier plan vertical (8) et une section de guidage de raccordement (44) qui est parallèle au premier plan vertical (8) et dont la distance par rapport au premier plan vertical (8) correspond à la largeur de la deuxième surface d'acheminement (24).

7. Le dispositif (2) que décrit l'une ou l'autre des revendications précédentes et qui se **caractérise par le fait que** la première surface d'acheminement (16) est disposée à la perpendiculaire du premier plan vertical et du deuxième plan vertical (8, 10).

8. Le dispositif (2) que décrit l'une ou l'autre des revendications précédentes et qui se **caractérise par le fait que** la deuxième surface d'acheminement (24) est disposée à la perpendiculaire du premier plan vertical (8) ou présente une pente en diagonale et à un certain angle par rapport au premier plan vertical (8).

9. Le dispositif (2) que décrit la revendication 8 et qui se **caractérise par le fait qu'**une sous-section (16 ') de la première surface d'acheminement (16), qui part du premier plan vertical (8), a la même largeur que la deuxième surface d'acheminement (24) et se situe à la perpendiculaire du premier plan vertical (8) ou présente une pente en diagonale et à un certain angle par rapport au premier plan vertical (8).

10. Le dispositif (2) que décrit l'une ou l'autre des revendications précédentes et qui se **caractérise par le fait que** la troisième surface d'acheminement (36) est disposée à la perpendiculaire des plans verticaux (8, 10).

11. Le dispositif (2) que décrit l'une ou l'autre des revendications précédentes et qui se **caractérise par le fait qu'**une section finale aval (50) de la deuxième surface d'acheminement (24) est disposée à la même hauteur qu'une section finale aval (48) de la troisième surface d'acheminement (36).

12. Le dispositif (2) que décrit l'une ou l'autre des revendications précédentes et qui se **caractérise par le fait que** la voie de décharge (52) a une quatrième surface d'acheminement (54) disposée à la perpendiculaire des plans verticaux (8, 10).

13. Le dispositif (2) que décrit l'une ou l'autre des revendications précédentes et qui se **caractérise par le fait que**, dans chaque cas, la première surface d'acheminement (16) et (ou), le cas échéant, la sous-section (16 ') de la première surface d'acheminement (16) et (ou) la deuxième surface d'acheminement (24) et (ou) la troisième surface d'acheminement (36) et (ou) la quatrième surface d'acheminement (54) se présente(nt) sous la forme d'une surface coulissante, d'une tôle métallique coulissante, d'une trémie, d'une piste à rouleaux menés ou passifs ou d'un convoyeur à bande ou courroie.

14. Le dispositif (2) que décrit l'une ou l'autre des revendications précédentes et qui se **caractérise par le fait que** la première surface d'acheminement (16), le cas échéant, la sous-section (16 ') de la première surface d'acheminement (16) et la deuxième surface d'acheminement (24) ont une pente inclinée vers le bas.

15. Le dispositif (2) que décrit l'une ou l'autre des revendications précédentes et qui se **caractérise par le fait que** ce dispositif (2) est associé à un dispositif supérieur de tri (4) et un dispositif inférieur de tri (6) et que ce dispositif (2) se présente sous la forme d'un point de terminaison.
